**Europäisches Patentamt**

**European Patent Office**

**Office européen des brevets**

(19)

(11) Veröffentlichungsnummer: **0 448 134 A2**

## (12) EUROPÄISCHE PATENTANMELDUNG

(21) Anmeldenummer: **91108693.2**

(22) Anmeldetag: **04.01.90**

(51) Int. Cl.5: **B61L 25/08**

Diese Anmeldung is am 28 - 05 - 1991 als Teilanmeldung zu der unter INID-Kode 60 erwähnten Anmeldung eingereicht worden.

(30) Priorität: **09.01.89 DE 3900387**

(43) Veröffentlichungstag der Anmeldung:
**25.09.91 Patentblatt 91/39**

(60) Veröffentlichungsnummer der früheren
Anmeldung nach Art. 76 EPÜ:

(84) Benannte Vertragsstaaten:
**AT BE CH DE DK FR GB NL**

(71) Anmelder: **Siemens Aktiengesellschaft
Wittelsbacherplatz 2
W-8000 München 2(DE)**

(72) Erfinder: **Hohlstein, Bernd, Dipl.-Ing.
Neue Reihe 12
W-3304 Neubrück(DE)**

(54) **Einrichtung zum optischen Überwachen eines Geschehens auf einer Meldetafel.**

(57) Ein zentraler Rechner (ANSR), der signaltechnisch sicher ausgeführt ist, erstellt gesonderte Steueranweisungen (T1, T2) zum Ansteuern jeweils eines Teiles der zu steuernden Leuchtelemente (L1 und L2, L3 bis L5) und übermittelt diese über zugeordnete Steuerbausteine (SB1.1, SB1.2) an die zugehörigen Mosaikbausteine (M1) der Meldetafel. In zyklischem Wechsel wird die Zuordnung der Steueranweisungen zu den Steuerbausteinen vertauscht. Die einem Beobachter vermittelte Darstellung eines Geschehens ändert sich hierdurch nicht, solange die Einrichtung ordnungsgerecht arbeitet. Bei etwaigen Ansteuerfehlern ergibt sich jedoch auf einzelnen Meldefeldern ein Blinkbetrieb, der die eingetretene Störung signalisiert. Bei einer Ausführungsform der Einrichtung mit je zwei Leuchtelementepaaren je Meldepunkt ist vorgesehen, über den einen Steuerbaustein jeweils alle ersten Leuchtelementepaare anzusteuern und die anderen Leuchtelementepaare in dieser Zeit abzuschalten. Auch hier wird die Zuordnung der Steueranweisungen zu den Steuerbausteinen zyklisch vertauscht. Im Falle nicht übereinstimmender Steueranweisungen für die beiden Leuchtelementepaare jedes Meldepunktes blinken die durch die Störung betroffenen Meldepunkte im Takt der Änderung der Steueranweisungen. Für den Fall der Störung ist noch eine einkanalige Überwachung des Geschehens möglich.

Die Erfindung bezieht sich auf eine in der DE-Patentanmeldung P 39 00 388 näher gekennzeichnete Einrichtung. Bei dieser Einrichtung erarbeitet ein zentraler Rechner Steueranweisungen zum bedarfsweisen An- und Abschalten von Leuchtelementen, die in einem Raster über eine Meldetafel verteilt angeordnet sind und überträgt diese Steueranweisungen in Form von Kommandotelegrammen an Steuerbausteine, die jeweils einzelnen oder einer Gruppe von Mosaikbausteinen zugeordnet sind. Die Meldetafel besteht dabei aus einer Vielzahl derartiger Mosaikbausteine. Die Leuchtelemente sind vorzugsweise als Leuchtdioden ausgebildet, die Steuerbausteine werden durch Mikrocontroller dargestellt.

Um etwaige Darstellungsfehler erkennen zu können, sieht die Einrichtung nach der der vorgenannten DE-OS vor, die an den Eingangsklemmen der Leuchtelemente anliegenden Potentiale abzufragen und an den steuernden Rechner zu übertragen, der die übertragenen Rückmeldungen mit den von ihm erarbeiteten Steueranweisungen vergleicht und im Falle von Abweichungen eine Störungsmeldung ausgibt. Für das Abgreifen der Potentiale und das Übertragen der entsprechenden Meldungen ist ein nicht unerheblicher Aufwand erforderlich: Die Mosaikbausteine weisen eine gesonderte Schaltebene für den Abgriff der Potentiale und die Absenderadressierung aus; auch die Steuerbausteine enthalten eine zweite Schaltebene für die Rückübertragung der Meldekennzeichen; für die Rückübertragung der Meldekennzeichen sind gesonderte Datenleitungen erforderlich.

Aufgabe der vorliegenden Erfindung ist es, die vorstehend definierte Einrichtung so weiterzubilden, daß eine sichere Anzeige gewährleistet ist, ohne daß es hierzu einer Rückübertragung von Meldekennzeichen an den steuernden Rechner bedarf.

Die Erfindung löst diese Aufgabe durch die kennzeichnenden Merkmale des Patentanspruches 1. Vorteilhafte Aus- und Weiterbildungen der erfindungsgemäßen Einrichtung sind in den Unteransprüchen angegeben.

Anspruch 2 benennt diejenigen Maßnahmen, die dazu führen, daß aus den zweikanalig erarbeiteten identischen Steueranweisungen unterschiedliche Steueranweisungen für die einzelnen Steuerbausteine der Steuerbausteinpaare gemäß Anspruch 1 werden.

Anspruch 3 beschreibt eine Ausführungsform der Erfindung mit verdoppelten Leuchtelementen für die einzelnen Meldepunkte. Bei dieser Ausführungsform der Erfindung sind die beiden Steuerbausteine jedes Steuerbausteinpaares jeweils im Wechsel wirksam. Diese Einrichtung gestattet es in Verbindung mit den Merkmalen des Anspruches 4, im Falle einer Anzeigestörung den Anzeigebetrieb einkanalig weiterzuführen.

Um sicherzustellen, daß auch bei Verwendung eines rechnerexternen Umschalters die Zuordnung der beiden Rechnerausgänge zu den Steuerbausteinen tatsächlich wechselt, ist gemäß Anspruch 5 ein in seinem Schaltverhalten überprüfbarer Umschalter vorzusehen. Die im Anspruch 6 angegebene Zyklusfolgezeit ermöglicht eine optisch besonders auffällige Kennzeichnung einer Anzeigestörung.

Die Ansprüche 7 bis 10 ermöglichen es einem Beobachter oder einer Automatik, das wechselweise Ansteuern der Leuchtelemente durch unterschiedliche Steuerbausteine optisch zu erkennen. Die Merkmale des Anspruches 11 gestatten es, sämtliche Leuchtelemente einer vorübergehenden Funktionskontrolle zu unterziehen, wobei sich etwaige Defekte optisch markant auf der Meldetafel darstellen.

Die Erfindung ist nachstehend anhand eines in der Zeichnung dargestellten Ausführungsbeispieles näher erläutert. Die Zeichnung zeigt schematisch das zyklische Einwirken zweier Steuerbausteine auf die Leuchtelemente eines Mosaikbausteines und ihre Ansteuerung durch einen zentralen Rechner.

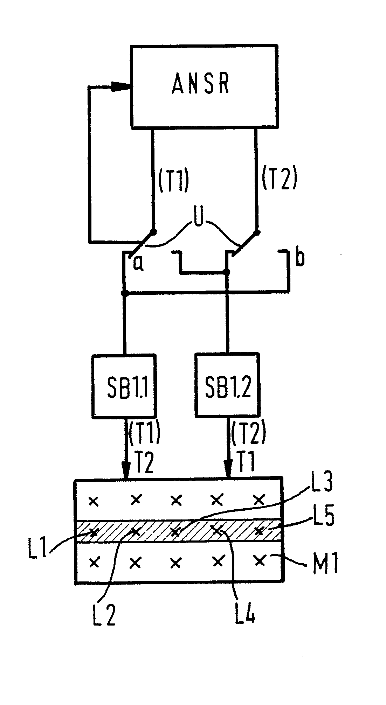

Die Zeichnung zeigt im unteren Teil schematisch einen Mosaikbaustein M1, der zum Beobachter hin durch eine ein Gleiselement darstellende Schablone abgedeckt ist. Dieser Mosaikbaustein steht für durch beliebige andere Schablonen abgedeckte Mosaikbausteine und auch für eine Gruppe von Mosaikbausteinen, die gemeinsam steuerbar sind. Der Mosaikbaustein weist 15 Meldefelder auf, die in Figur 1 durch Kreuze angedeutet sind. Zur Ausleuchtung der einzelnen Meldefelder dienen unterhalb der Schablone angeordnete Leuchtelemente, vorzugsweise Leuchtdioden, zur Abstrahlung von Licht unterschiedlicher Spektralfarben. Von den 15 Meldepunkten des Mosaikbausteines werden im dargestellten Ausführungsbeispiel höchstens 5 für die Ausleuchtung des angenommenen Gleisabschnittes benötigt. Die Ausleuchtung erfolgt in den Farben grün und rot sowie gelb als Mischfarbe von grün und rot.

Gesteuert werden die Leuchtdioden über zwei dem Mosaikbaustein bzw. einer Gruppe von Mosaikbausteinen zugeordnete Steuerbausteine SB1.1 und SB1.2. Jeder dieser Steuerbausteine hat zu einem beliebigen ersten Zeitpunkt Zugriff zu einem ersten Teil der Leuchtelemente, während der andere Steuerbaustein zu dieser Zeit Zugriff hat auf die übrigen Leuchtelemente des Mosaikbausteines bzw. der Gruppe von Mosaikbausteinen. Diese Zuordnung wechselt, so daß zu einem zweiten Zeitpunkt die zuvor vom Steuerbaustein SB1 gesteuerten Leuchtdioden nunmehr vom Steuerbaustein SB1.2 gesteuert werden und umgekehrt. Die Zuordnung der Leuchtdioden zu den einzelnen Steuerbausteinen kann beliebig gewählt sein. Sie kann z.B. nach geographischen Gesichtspunkten erfolgen oder auch nach der Farbe der Leuchtdioden. Sinnvoll ist eine in etwa gleichmäßige Aufteilung der Leuchtdioden auf die beiden Steuerbausteine. Die beiden Steuerbausteine erhalten die an die Leuchtelemente der Mosaikbausteine weiterzugebenden Steueranweisungen von einem zentralen Ansteuerrechner ANSR, der in bekannter Weise als signaltechnisch sicherer Rechner ausgebildet ist. Dieser Rechner erstellt die Steueranweisungen für die beiden Steuerbausteine zweikanalig und vergleicht die beiden Kanäle rechnerintern laufend auf Übereinstimmung. Zur Vorgabe der unterschiedlichen Steueranweisungen an die beiden Steuerbausteine blendet der Rechner intern einzelne Steueranweisungen aus den zweikanalig erarbeiteten identischen Steueranweisungen aus und übermittelt die verbleibenden Steueranweisungen über einen Umschalter U an die Steuerbausteine. In Figur 1 sind die an die beiden Steuerbausteine ausgegebenen Steueranweisungen mit Ta und Tb bezeichnet. Diese Steueranweisungen ergänzen sich in ihrer Aussage zu dem darzustellenden Meldebild. Beispielsweise veranlaßt der Steuerbaustein SB1.1 das Steuern der Leuchtdioden L1 und L2, während der Steuerbaustein SB1.2 die Leuchtdioden L3 bis L5 steuert.

Nach einer vorgegebenen Anschaltdauer wechselt der Umschalter U von der Schaltstellung a in die Schaltstellung b. Die Steueranweisungen Ta gelangen nun auf den Steuerbaustein SB1.2, während die Steueranweisungen Tb auf den Steuerbaustein SB1.1 gelangen. Nunmehr steuert der Steuerbaustein SB1.2 die beiden Leuchtdioden L1 und L2, während der Steuerbaustein SB1.1 die Leuchtdioden L3 bis L5 steuert. Bei ordnungsgerechtem Betriebszustand der Einrichtung ändert sich dabei an der Darstellung des Mosaikbausteines nichts. Liegt jedoch ein Ansteuerfehler vor, so unterscheiden sich die Darstellungen in den beiden Schaltphasen des Umschalters. Dieser Darstellungswechsel ist für einen Beobachter bei zyklischer Umsteuerung des Umschalters U durch Blinken einzelner Leuchtdioden im Takt der Umschaltfrequenz erkennbar. Der Beobachter weiß dann, daß die Anzeige gestört ist und daß er aus dem ihm signalisierten Meldebild keine sicherheitsrelevanten Steueraufträge ableiten darf. Als Umschaltfrequenz für den Umschalter hat sich eine Frequenz von etwa 1 Hertz als vorteilhaft erwiesen, weil diese eine optisch sehr markante Kennzeichnung einer Störung bewirkt.

Die Umschaltung der beiden Ausgangskanäle des Ansteuerrechners auf die beiden Steuerbausteine kann rechnerintern oder wie im Beispiel rechnerextern erfolgen. Bei rechnerexterner Umschaltung ist es von Vorteil, einen in seinem Schaltverhalten überwachbaren Umschalter zu verwenden. Hierzu kann beispielsweise die Schaltstellung des Umschalters in den sicheren Ansteuerrechner zurückgelesen werden; es ist aber auch möglich, die jeweilige Schaltstellung dem Beobachter optisch erkennbar zu machen. Dies kann beispielsweise dadurch geschehen, daß der zentrale Rechner ausgewählte Leuchtelemente der Meldetafel entweder nur über den einen oder nur über den anderen Steuerbaustein anzuschalten vermag. Dies wirkt sich für die betreffenden Leuchtelemente aus wie eine Ansteuerstörung, d.h. die betreffenden Leuchtelemente leuchten abwechselnd auf und verlöschen dann wieder. Für die Kennzeichnung des Umschaltvorganges reicht der ausschließliche Zugriff auf ein einziges Leuchtelement aus. Zweckmäßiger, weil optisch markanter, ist es jedoch, von beiden Steuereinrichtungen her im Wechsel auf ausgewählte Leuchtelemente zuzugreifen, die räumlich benachbart angeordnet sind, insbesondere auf solche, die zur Abstrahlung verschiedenfarbigen Lichtes eingerichtet sind. Das ordnungsgerechte rechnerinterne oder rechnerexterne Umschalten der Rechnerausgänge ist dann für den Beobachter an einem in seiner Farbgebung umschaltbaren Meldefeld erkennbar. Der Beobachter erkennt aus dem Blinken dieses ausgewählten Meldefeldes, daß die ihm vermittelte Darstellung tatsächlich eine dynamisch im Takt der Blinkfrequenz erneuerte Darstellung aus beiden Rechnerkanälen ist und nicht etwa eine statische Darstellung, wie sie sich beim Hängenbleiben des Umschalters ergeben könnte. Das Blinken der ausgewählten Leuchtelemente läßt sich nicht nur vom Beobachter, sondern auch durch zugehörige Überwacher detektieren, welche entweder die Spannungen an den ausgewählten Leuchtelementen abgreifen oder das von ihnen ausgehende Licht bewerten.

Zur Funktionskontrolle der für die Darstellung verwendeten Leuchtdioden ist es von Vorteil, vom Ansteuerrechner her in einem Prüfbetrieb so auf die beiden Steuerbausteine einzuwirken, daß sämtliche über die betreffenden Steuerbausteine erreichbaren Leuchtelemente vorübergehend angeschaltet und dann wieder abgeschaltet werden. Der Ausfall einzelner Leuchtelemente ist an dem Dunkelbleiben einzelner Meldefelder bzw. der an diesen Meldefeldern eingetretenen Farbänderung erkennbar.

Eine bevorzugte Ausführungsform der Erfindung sieht vor, daß jedem Meldefeld zwei paar räumlich benachbart angeordneter Leuchtelemente zur Abstrahlung von Licht unterschiedlicher Spektralfarben zugeordnet sind und daß der zentrale Rechner über den einen Steuerbaustein allen ersten Leuchtelementepaaren der Meldefelder Steueranweisungen zur Darstellung des Gesamtgeschehens zuführt, während er gleichzeitig über den anderen Steuerbaustein die Abschaltung aller anderen Leuchtelementepaare veranlaßt und daß der zentrale Rechner die Zuordnung der Steueranweisungen zu den beiden Steuerbausteinen zyklisch vertauscht. Die von jedem Steuerbaustein abgegebenen Steueranweisungen führen zu völlig übereinstimmenden, lediglich um den Abstand der Leuchtelementepaare versetzten Darstellungen, wobei in den einzelnen Meldepunkten entweder das eine oder das andere Leuchtelementepaar angesteuert wird. Im Fall von Ansteuerfehlern ergibt sich auch hier für die durch den Fehler betroffenen Leuchtelemente ein optisch auffälliges Blinken, das vom Beobachter wahrgenommen werden kann.

Die Zuordnung von jeweils zwei Leuchtelementepaaren zu den einzelnen Meldefeldern und die Steuerung der Gesamtanzeige im Wechsel aus dem einen bzw. anderen Rechner des sicheren Ansteuerrechners macht es möglich, beim Erkennen eines Darstellungsfehlers die weitere Darstellung des Geschehens über den durch die Störung nicht betroffenen Steuerbaustein vorzunehmen. Man gelangt so zu einer durch die eingetretene Störung nicht beeinflußten einkanaligen Darstellung des Geschehens, wie sie für reine Überwachungszwecke vollkommen ausreichend ist. Allerdings dürfen von dieser Darstellung dann keine betriebsgefährdenden Kommandos, sogenannte Hilfshandlungen, abgeleitet werden.

Auch bei dieser Einrichtung ist es sinnvoll und vorteilteilhaft, das wechselweise Aktivieren der den einzelnen Mosaikbausteinen oder Gruppen von Mosaikbausteinen zugeordneten Steuerbausteine durch ausschließliches Ansteuern ausgewählter Leuchtelemente eines Überwachungsfeldes anzuzeigen und ggf. eine Funktionsprüfung aller an der Darstellung beteiligten Leuchtelemente vorzunehmen.

**Patentansprüche**

1.  Einrichtung zum optischen Überwachen eines Geschehens auf einer Meldetafel
    mit einer Vielzahl von Meldefeldern, die von der Rückseite her durch bedarfsweise an- und abschaltbare Leuchtelemente von Mosaikbausteinen zu beleuchten sind, wobei jedem Meldefeld mindestens zwei räumlich benachbarte Leuchtelemente für die Abstrahlung unterschiedlicher Spektralfarben bei angeschaltetem Leuchtelement zugeordnet sind,
    mit einem zentralen Rechner zum Steuern der Leuchtelemente, der die von ihm für die Leuchtelemente der einzelnen Mosaikbausteine erarbeiteten Steueranweisungen in Form von Kommandotelegrammen den einzelnen Mosaikbausteinen über jedem Mosaikbaustein oder einer Gruppe von Mosaikbausteinen zugeordnete, räumlich benachbart angeordnete Steuerbausteine zuführt und
mit den Mosaikbausteine zugeordneten Halbleiterspeicher zum Speichern der übermittelten Steueranweisungen und zum Einstellen von den Leuchtelementen zugeordneten Treibern entsprechend den jeweils übermittelten Steueranweisungen, **dadurch gekennzeichnet**, daß der zentrale Rechner (ANSR) als signaltechnisch sicherer Rechner ausgeführt ist, der die Steueranweisungen (Ta, Tb) zweikanalig erstellt und diese zweikanalig an zwei zur Steuerung einzelner oder einer Gruppe von Mosaikbausteinen (M1) vorgesehene Steuerbausteine (SB1.1, SB1.2) überträgt,
von denen der eine (SB1.1) Steueranweisungen (Ta) zur ausschließlichen Steuerung eines Teiles der Leuchtelemente (L1, L2) der angeschlossenen Mosaikbausteine (M1) und der andere Steueranweisungen (Tb) zur ausschließlichen Steuerung der übrigen Leuchtelemente (L3 bis L5) der angeschlossenen Mosaikbausteine erhält und
daß die Zuordnung der Steueranweisungen (Ta, Tb) zu den beiden Steuerbausteinen (SB1.1, SB1.2) zyklisch vertauscht wird und die zyklische Vertauschung der Zuordnung überwacht wird.

2.  Einrichtung nach Anspruch 1, **dadurch gekennzeichnet**, daß der zentrale Rechner (ANSR) die jeweils gleichzeitig an die beiden Steuerbausteine (SB1.1, SB1.2) auszugebenden unterschiedlichen Steueranweisungen (Ta, Tb) durch Ausblenden einzelner Steueranweisungen aus den zweikanalig erarbeiteten identischen Steueranweisungen gewinnt.

3.  Einrichtung nach Anspruch 1, **dadurch gekennzeichnet**, daß jedem Meldefeld zwei Paar räumlich benachbart angeordneter Leuchtelemente zur Abstrahlung von Licht unterschiedlicher Spektralfarben zugeordnet sind, daß der zentrale Rechner (ANSR) über den einen Steuerbaustein (SB1.1) allen ersten Leuchtelementepaaren der Meldefelder die von ihm zur Darstellung des Gesamtgeschehens erarbeiteten Steueranweisungen zuführt, während er gleichzeitig über den anderen Steuerbaustein (SB1.2) die Abschaltung aller anderen Leuchtelementepaare veranlaßt und daß der zentrale Rechner die Zuordnung der Steueranweisungen zu den beiden Steuerbausteinen zyklisch vertauscht.

4.  Einrichtung nach Anspruch 3, **dadurch gekennzeichnet**, daß der zentrale Rechner beim Erkennen eines Darstellungsfehlers in einen Steuermodus schaltbar ist, in dem er die Steueranweisungen zur Darstellung des Geschehens ausschließlich über den durch die Störung nicht betroffenen Steuerbaustein ausgibt.

5. Einrichtung nach Anspruch 1 oder 4, **dadurch gekennzeichnet**, daß bei rechnerexterner Umschaltung der beiden Rechnerausgänge ein in seinem Schaltverhalten überwachbarer Umschalter (U) verwendet ist.

6. Einrichtung nach Anspruch 1, **dadurch gekennzeichnet**, daß die Zyklusfolgezeiten in der Größenordnung von einer Sekunde liegen.

7. Einrichtung nach Anspruch 1, **dadurch gekennzeichnet**, daß der zentrale Rechner ausgewählte Leuchtelemente entweder nur über den einen oder nur über den anderen Steuerbaustein anschaltet.

8. Einrichtung nach Anspruch 7, **dadurch gekennzeichnet**, daß die ausgewählten Leuchtelemente räumlich benachbart angeordnet sind.

9. Einrichtung nach Anspruch 7 und 8, **dadurch gekennzeichnet**, daß die ausgewählten Leuchtelemente zur Abstrahlung verschiedenfarbigen Lichtes eingerichtet sind.

10. Einrichtung nach mindestens einem der Ansprüche 5 bis 9, **dadurch gekennzeichnet**, daß Mittel zum Überwachen des wechselweisen An- und Abschaltens der ausgewählten Leuchtelemente vorgesehen sind.

11. Einrichtung nach Anspruch 1 oder 4, **dadurch gekennzeichnet**, daß der zentrale Rechner dazu eingerichtet ist, in einem Prüfmodus über die beiden Steuerbausteine der Steuerbausteinpaare sämtliche über die betreffenden Steuerbausteine erreichbaren Leuchtelemente an- oder an- und abzuschalten.